Europäisches Patentamt

European Patent Office

Office européen des brevets

(19)

(11) Publication number: **0 062 931**

**A1**

(12) # EUROPEAN PATENT APPLICATION

(21) Application number: **82200164.0**

(22) Date of filing: **12.02.82**

(51) Int. Cl.³: **G 01 K 17/08**

(30) Priority: **18.02.81 NL 8100783**

(43) Date of publication of application:
**20.10.82 Bulletin 82/42**

(84) Designated Contracting States:
**AT BE CH DE FR GB IT LI NL SE**

(71) Applicant: **de Wiljes, Hans Edzo**
**Amstel 169**
**NL-1018 ES Amsterdam(NL)**

(72) Inventor: **de Wiljes, Hans Edzo**
**Amstel 169**
**NL-1018 ES Amsterdam(NL)**

(74) Representative: **de Vries, Johannes Hendrik**
**Fokke et al,**
**Octrooibureau Los en Stigter B.V. P.O. Box 20052**
**NL-1000 HB Amsterdam(NL)**

(54) Device for measuring the energy transported in a fluid circulation system.

(57) A device (1) for measuring the energy transported in a fluid circulation system including a supply pipe and a return pipe, comprises a tube (2) to be incorporated in the supply pipe, and a tube (3) to be incorporated in the return pipe. A transducer (4) with a thermally conductive body (6) is mounted between these tubes (2, 3), wherein two temperature measuring elements (11, 12) are contacting the body (6). In the respective tubes two opposite surfaces (9, 10) of the body (6) are along at least a part of their length in heat interchanging contact with the fluid flowing through these tubes (2, 3). In at least one of the tubes (2, 3) a shielding means (13) is mounted in such a manner that a channel (14, 15) accessible for the fluid flowing through this tube (2, 3) is formed, which channel substantially shields the corresponding surface (9, 10) of the body (6) from the fluid flowing through the tube (2, 3). However, a portion of this fluid flows in laminar fashion through the channel (14, 15).

Thereby, the temperature measuring elements (11, 12) produce a measuring signal which is substantially linearly dependent on the energy transported so that a simple processing of the measuring signal is possible.

fig.2

Device for measuring the energy transported in a fluid circulation system.

The invention relates to a fluid circulation system with a supply pipe and a return pipe, comprising a tube to be incorporated in the supply pipe, a tube to be incorporated in the return pipe, and a transducer having a thermally conductive body mounted between both said tubes and two temperature measuring elements contacting the thermally conductive body and producing a measuring signal depending on the transported energy.

Such a device can be used, for example, for measuring the amount of energy used for heating houses or the like. In the development of such a device it should be borne in mind that the different material properties are dependent on the absolute temperature. In particular, the viscosity of water is highly dependent on the temperature. These material properties affect the local and average coefficients of heat transfer between the fluid and the parts of the device contacting said fluid. As the temperature has generally the greatest influence on the viscosity, this temperature influence on the material properties will hereinafter be indicated as "viscosity effect".

In a known device of this type the measuring signal obtained provides insufficient information for determining the energy transported. In this case, three further temperature measuring elements are provided, two of which determine the temperature difference between the warm and cold fluids, whereas the third measuring element measures the absolute temperature of the warm fluid. The temperature measuring elements all are connected to an electronic computing unit which can compute the energy consumption for each time unit using an empirically determined non-linear function. Thereby, this known device is rather expensive, while moreover it is not possible to add the measuring signals of a plurality of devices and to commonly process said measuring signals by the same electronic circuit.

The invention aimes to provide a device of the above-mentioned type, wherein said disadvantages are obviated in a simple but nevertheless effective manner.

To this end, the device according to the invention is characterized in that two opposite surfaces of the thermally conductive body in the respective tubes are along at least a part of their length in heat interchanging contact with the fluid flowing through said tubes, wherein in at least one of said tubes at least one channel accessible for the fluid flowing through said one tube is formed by means of a shielding means, which channel substantially shields the corresponding surface of the thermally conductive body from the fluid flowing through said one tube and through which channel a portion of the fluid flows in laminar fashion.

In this manner it is obtained that the measuring signals provided by both said temperature measuring elements are dependent in a substantially linear fashion of the energy transported, i.e. both of the fluid flow rate and of the temperature difference between the warm and the cold fluids, so that a simple processing of the measuring signal is possible. The energy consumption in a certain period can simply be determined by intergrating the measuring signal. Moreover, a superposition of a plurality of measuring signals is possible, whereafter the sum signal can be processed by one and the same integration circuit. Further, the device according to the invention has a very simple construction so that the manufacturing costs are low.

The operation of the device according to the invention is based in principle on the boundary layer theory valid for gasses. Given the different material properties and the average temperature of the warm and the cold fluids, it appears to be possible to obtain a linear relationship between the produced measuring signal $\theta$ and the fluid flow rate V and the temperature difference $\Delta T$ between the warm and the cold fluids for a certain range of the distance between both surfaces of the thermally conductive body. It appeared from experiments that, for a linear relation between the measuring signal and the fluid flow rate, it is necessary that a laminar flow occurs at at least one surface of the thermally conductive body.

Besides for realising a laminar flow, the shielding
means functions also to eliminate the above-mentioned
viscosity effect, so that the absolute temperature does not
affect the measuring signal anymore. From Bernouilli's law
it follows that at a decrease of the viscosity the mass distribution between the fluid flow through the tube - hereinafter indicated as the main flow - and the fluid flow
through the channel branched off from this main flow -
hereinafter indicated as the measuring flow - changes in
favour of the main flow. At an increase of the absolute
temperature the viscosity becomes smaller, while the coefficient of heat transfer becomes greater. Due to this last
effect the measuring signal would increase if the increase
of the coefficient of heat transfer would not be compensated
by a decrease of the flow rate of the measuring flow. In
this manner, the viscosity effect can completely be eliminated
by taking suitable dimensions of the shielding means.

Preferably, a shielding means is provided at both
said surfaces of the thermally conductive body. Thereby, a
greater measuring signal is obtained.

According to a favourable embodiment of the invention each shielding means is formed as a U-shaped cap, the
legs of which join the sides of said thermally conductive
body extending in the flow direction, whereas the body of
said cap is directed inwardly into the corresponding tube.

According to a preferable embodiment of the invention, a cross piece is mounted at a distance in front of
the upstream end of each channel, said cross piece extending along the whole width of the channel, wherein the
upper side of said cross piece is substantially coplanar
with the upper side of the shielding means.

In this manner the influence of the kinetic energy
of the main flow on the mass distribution between the main
flow and the measuring flow is eliminated.

The invention will hereinafter be further explained
by reference to the drawings, in which an embodiment of the
device according to the invention is shown.

Fig. 1 shows a perspective view of an embodiment of the device according to the invention;

Fig. 2 schematically shows in cross-section in which manner the device according to fig. 1 is mounted between two tubes;

Fig. 3 schematically shows a top view of the tubes of fig. 2 in a smaller scale.

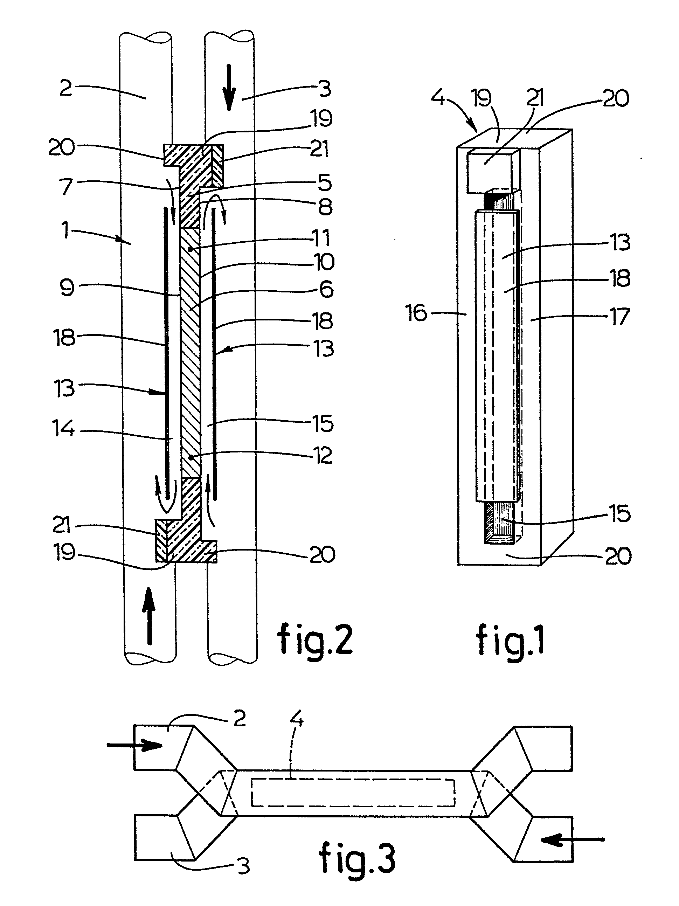

Fig. 1 and 2 show a device 1 for measuring the energy transported in a fluid circulation system (not shown) with a supply pipe and a return pipe. The device 1 comprises a tube 2 to be incorporated in the supply pipe, and a tube 3 to be incorporated in the return pipe, which tubes 2, 3 are only partially shown in fig. 1 A. A transducer 4 perspectively shown in fig. 1, is mounted between the tubes 2, 3, which transducer is in connection with the interior of said tubes 2, 3 through openings formed in the tubes so that a heat interchanging contact between the fluid flowing through the tubes 2, 3 and the parts of the transducer 4 is possible.

The transducer 4 consists of an oblong rectangular flat plate 5, a thermally conductive body 6 being inserted in the central part of said plate 5. The body 6 is formed as an oblong block of a material of high thermal conductivity, such as copper. The plate 5 consists of a material of low thermal conductivity, such as for instance plexiglass or PVC. As shown in fig. 2, the opposite main surfaces 7, 8 of the plate 5 are substantially coplanar with the opposite surfaces 9, 10 of the thermally conductive body 6.

Two temperature measuring elements 11 and 12 are mounted in the thermally conductive body 6, which elements 11, 12 produce a measuring signal $\Theta$ corresponding to the temperature difference between the ends of the thermally conductive body 6, which measuring signal $\Theta$ is substantially linearly dependent on the average fluid flow rate V and the temperature difference T between the warm and the cold fluids. The temperature measuring elements 11, 12 can be formed as thermo couples, for example.

The operation of the device 1 described is based in principle on the boundary layer theory valid for gasses. It can be shown that, given the different material properties and the average temperature of the warm and the cold fluids, a linear relation exists between the measuring signal $\theta$ produced and the fluid flow rate V and the temperature difference $\Delta T$ for a certain range of the thickness of the thermally conductive body 6. Experiments have shown that to this end it is necessary that the thermally conductive body 6 is in heat interchanging contact with the fluid flowing through the tubes 2 and 3, respectively, through a laminar flow at at least one of the surfaces 9, 10.

At the device 1 shown, this laminar flow is obtained at both surfaces 9 and 10 by means of shielding means formed as a U-shaped cap 13. Said caps 13 form channels 14, 15 which substantially shield the surfaces 9, 10 from the fluid flowing through the tubes 2, 3 while a small portion of the fluid flows through the channels 14, 15 in laminar fashion, which small portion will be indicated as measuring flow to distinguish from the main flow through the tube 2,3.

At the embodiment shown in the drawings the U-shaped cap 13 is obtained in that those parts of the plate 5, which join the sides of the thermally conductive body 6 extending in the flow direction, are raised whereby raised edges 16,17 are obtained, and in that a cover plate 18 is fixed onto these edges 16, 17. The length of the cover plates 18 is greater than the length of the thermally conductive body 6 so that it is guaranteed that the body 6 is not in a direct heat interchanging contact with the main flow. It is noted that other types of shielding means are possible such as for instance tubes fixed to the surfaces 9, 10 and extending in flow direction or a plurality of plate-like strips perpendicular to the surfaces 9, 10 and extending in flow direction.

Moreover, the above-mentioned viscosity effect can be eliminated by suitable dimensions of the channels 14, 15. From Bernouilli's law it appears that at a decrease of the viscosity, i.e. an increase of the absolute temperature, the mass distribution between the main flow and the measuring flow changes in favour of the main flow. At an increase of the absolute temperature the coefficients of heat transfer also become greater. Thereby, the measuring signal would increase if the increase of the coefficients of heat transfer would not be compensated by a lower flow rate of the measuring flow. A good operation is obtained at the embodiment described at a distance between the surfaces 9, 10 of the thermally conductive body 6 and the cover plates 18 of ± 3 mm. Therefore, it is obtained in a simple manner that the absolute temperature does substantially not affect the measuring signal ⊖ so that at a temperature of 70° C of the warm fluid and 30° C of the cold fluid the same measuring signal ⊖ is obtained as at a temperature of 90° C of the warm fluid and 50° C of the cold fluid.

The above-mentioned mass distribution between the main flow and the measuring flow also is affected by the kinetic energy of the flowing fluid. This influence is eliminated at the device 1 by providing a cross piece 19 at a distance in front of the upstream end of each channel 14, 15, which cross piece 19 extends along the whole width of the channel 14, 15 and is unitary with the plate 5 in this case. Behind the downstream end of the channels 14, 15 a corresponding cross piece 20 is provided, which cross piece 20 also is unitary with the plate 5. Thereby, it is obtained that the fluid is not forced into the channels 14, 15 anymore. By choosing the distance between the cover plate 18 and the cross piece 19 at about 3 mm and by taking the distance between the cover plate 18 and the other cross piece 20 substantially greater, the measuring flow is pumped through the channels 14, 15 by the flowing fluid.

By providing a step member 21 the "pump function" of the main flow can be intensified, wherein also a better linear relation between the flow rate of the measuring flow and the flow rate of the main flow is obtained for the whole flow rate range of the fluid flow.

At the device 1 the measuring flow flows in opposite direction to the main flow through the channels 14 and 15, respectively. If desired, the measuring flow can flow in the same direction as the main flow through the channels 14 and 15, respectively, by adapting the dimensions accordingly. The opposite direction of the measuring flow has the advantage that, at application of the device in buildings, in which the warm flow is generally pumped upwards and the cold flow downwards, the measuring flow at the cold side of the thermally conductive body 6 is upwardly. Thereby, possible vapour bubbles which can develop under circumstances at the cold side of the thermally conductive body 6 and can adversely affect the measuring signal, can be quickly removed by the measuring flow.

It is noted that the development of such vapour bubbles can be prevented by adding a small amount of detergent to the fluid.

The linear relation between the measuring signal $\theta$ and the fluid flow rate V and the temperature difference $\Delta$ T can be further improved by making the cover plate 18 from a thermally conductive material, whereby some heat interchanging between the measuring flow and the main flow is possible. Further improvement of the linearity is possible by providing a non-isotropic thermal conductivity in thickness direction of the thermally conductive body 6; for example, by making the thermally conductive body 6 from a plurality of material layers having different thermal conductivity properties.

Fig. 3 shows a top view showing the form of the tubes 2, 3 to be incorporated in the supply pipe and return pipe, respectively. The construction of the transducer 4 is based on mounting the transducer between the tubes formed in the manner shown. Further, the construction shown has the advantage that pollution of the transducer 4 is avoided as much as possible because the dirt particles present in the fluid will not or substantially not pass through the tubes near the openings formed in these tubes 2, 3 for the transducer 4.

The length of the thermally conductive body 6 can be 3-10 cm. In practice, good results are obtained with a length of 6 cm. The thickness of the thermally conductive body can be 1-12 mm, preferably a thickness of 6 mm is used.

The invention is not restricted to the above-described embodiment which can be varied in a number of ways within the scope of the invention.

0062931

## C L A I M S

1. Device for measuring the energy transported in a fluid circulation system with a supply pipe and a return pipe, comprising a tube to be incorporated in the supply pipe, a tube to be incorporated in the return pipe, and a transducer having a thermally conductive body mounted between both said tubes and two temperature measuring elements contacting the thermally conductive body and producing a measuring signal depending on the transported energy, c h a r a c t e r i z e d in that two opposite surfaces of the thermally conductive body in the respective tubes are along at least a part of their length in heat interchanging contact with the fluid flowing through said tubes, wherein in at least one of said tubes at least one channel accessible for the fluid flowing through said one tube is formed by means of a shielding means, which channel substantially shields the corresponding surface of the thermally conductive body from the fluid flowing through said one tube and through which channel a portion of the fluid flows in laminar fashion.

2. Device according to claim 1, c h a r a c t e r i z e d in that a shielding means is applied at both said surfaces of the thermally conductive body.

3. Device according to claim 1 or 2, c h a r a c t e r i z e d in that each shielding means is formed as a U-shaped cap, the legs of which join the sides of said thermally conductive body extending in the flow direction, whereas the body of said cap is directed inwardly into the corresponding tube.

4. Device according to anyone of the preceding claims, c h a r a c t e r i z e d in that the transducer comprises an oblong plate of a material of a low thermal conductivity, in which plate the thermally conductive body is inserted, wherein the opposite main surfaces of the plate each are in connection with the interior of a tube through openings formed in said tubes and wherein said surfaces of the thermally conductive body are coplanar with the corresponding main surfaces.

5. Device according to anyone of the preceding claims, c h a r a c t e r i z e d in that a cross piece is mounted at a distance in front of the upstream end of each channel, said cross piece extending along the whole width of the channel, wherein the upper side of said cross piece is substantially coplanar with the upper side of the shielding means.

6. Device according to claim 5, c h a r a c t e r- i z e d in that a cross piece is mounted at a distance behind the downstream end of each channel, said cross piece extending along the whole width of the channel, wherein the upper side of said cross piece is substantially coplanar with the upper side of the shielding means.

7. Device according to anyone of the preceding claims, c h a r a c t e r i z e d in that a step member protruding with respect to the upper side of the shielding means is formed in flow direction in front of the entrance of the channel formed by the shielding means.

8. Device according to claim 7, c h a r a c t e r - i z e d in that said step member is disposed in front of the upstream end of the shielding means.

9. Device according to claim 7 or 8, c h a r a c - t e r i z e d in that the length in flow direction of the entrance opening of the channel behind the step member is about 3 mm.

10. Device according to anyone of the preceding claims, c h a r a c t e r i z e d in that the shielding means consists of a thermally conductive material.

11. Device according to anyone of the preceding claims, c h a r a c t e r i z e d in that the thermally conductive body has a non-isotropic thermal conductivity in a direction perpendicular to said surfaces of said body.

12. Device according to claim 11, c h a r a c t e r- i z e d in that the thermally conductive body is assembled from a plurality of material layers having different thermal conductivity properties.

13. Device according to anyone of the preceding claims 1, 2, 4-12, c h a r a c t e r i z e d in that the (each) shielding means consists of a plurality of tubes fixed to the corresponding surface of the thermally conductive body and extending in flow direction.

14. Device according to anyone of the preceding claims 1, 2, 4-12, c h a r a c t e r i z e d in that the (each) shielding means consists of a plurality of plate-like strips extending substantially perpendicular to the corresponding surface of the thermally conductive body.

15. Device according to anyone of the preceding claims 4-14, c h a r a c t e r i z e d in that the length of the (each) shielding means is greater than the length of the thermally conductive body.

16. Device according to anyone of the preceding claims, c h a r a c t e r i z e d in that the thermally conductive body is formed as an oblong block having a thickness of 4-12 mm.

17. Device according to claim 16, c h a r a c t e ri z e d in that the length of the thermally conductive body is 3-10 cm.

18. Transducer to be used with a device according to anyone of the preceding claims.

fig.2

fig.1

fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A- 806 033 (DETECTIF; R.E.E.CHEVALIER) *Figures 1,3,4,5; Introduction; page 2, line 44 - page 4, line 12* | 1 | G 01 K 17/08 |
| P | EP-A-0 024 778 (NEDERLANDSE CENTRALE ORGANISATIE VOOR TOEGEPAST-NATUURWETENSCHAPPELYK ONDERZOEK) *Figure 2; page 5, line 33 - page 6, line 31* | 1 | |
| A | DE-A-2 528 385 (ZENTRA ALBERT BURKLE K.G.) *Figure 1; page 8, paragaph 2 - page 11, paragraph 1; page 13, paragraph 1* | 1 | |
| A | DE-A-1 573 296 (W.ROETZEL) *Figure 3b; the whole description* | 1 | TECHNICAL FIELDS SEARCHED (Int. Cl. ³) G 01 K 17 G 01 F 1 |

The present search report has been drawn up for all claims

| Place of search THE HAGUE | Date of completion of the search 02-08-1982 | Examiner VISSER F.P.C. |
|---|---|---|